# EUROPEAN PATENT SPECIFICATION

(11) **EP 2 231 434 B1**
(45) Date of publication and mention of the grant of the patent: **23.12.2015**
(21) Application number: 08846354.2
(22) Date of filing: 24.10.2008
(51) Int. Cl.: B60K 17/346

(54) **UTILITY VEHICLE WITH AT LEAST THREE DRIVEABLE VEHICLE AXLES**
NUTZFAHRZEUG MIT MINDESTENS DREI ANTREIBBAREN FAHRZEUGACHSEN
VÉHICULE UTILITAIRE POURVU D'AU MOINS TROIS ESSIEUX À ENTRAÎNEMENT

(30) Priority: 08.11.2007 DE 102007053266
(43) Date of publication of application: 29.09.2010
(73) Proprietor: AGCO GmbH, 87616 Marktoberdorf (DE)
(72) Inventor: HONZEK, Robert, 87647 Oberthingau (DE)
(74) Representative: Smith, Louise Marie
(86) International application number: PCT/EP2008/009019
(87) International publication number: WO 2009/059700

(56) References cited:
- EP-A1- 0 256 941
- CZ-B6- 288 674
- DE-A1- 10 343 656
- GB-A- 1 298 871
- US-A- 5 147 010
- US-A1- 2003 205 422
- US-A1- 2005 109 549
- US-A1- 2006 243 512

## Description

The present invention relates to a utility vehicle, in particular an agricultural tractor, with at least three driveable vehicle axles, having a front axle, a middle axle and a rear axle.

With utility vehicles, in particular construction vehicles and agricultural utility vehicles, the trend is towards constantly designing the vehicles to be larger. As a rule, such large vehicles can be operated with higher specific productivity. In the agricultural sector, such utility vehicles comprise, in particular tractors, agricultural towing vehicles, combine harvesters, utility vehicles for spraying plant protection agents, self-propelled fertilizer scattering vehicles and other self-propelled working machines, such as combine harvesters, forage harvesters, self-propelled spraying units, self-propelled liquid fertilizer sprayers and beet lifters. In the agricultural sector a trend can be observed in this context, in that the agricultural cultivated land is being divided among increasingly fewer operating entities, the size of which is increasing accordingly. As a consequence, these operating entities are procuring larger machines, and in particular larger agricultural utility vehicles, because as a rule the productivity rises with the size of the machines and in most cases the procurement price of such larger machines is also lower in relation to their productivity and performance.

A further side effect of the development towards large operating units with large agricultural usable areas is the increasing distance between the locations of these operating units and the actual places at which the vehicles are employed, such as fields or woodlands. As a result, there is a requirement imposed on the agricultural utility vehicles that they be designed to be driven on roads at comparatively high speeds. This requirement applies not only to agricultural utility vehicles, but to utility vehicles in general, such as construction vehicles too. Accordingly, there is a requirement for utility vehicles which are designed in such a way that they can be operated at a maximum speed of 62 km/h or higher, so that they can be driven on motorways and main highways. In the agricultural sector in particular, there is a requirement for tractors and agricultural towing vehicles, which on the one hand are designed to take on the most demanding towing or pulling work and, on the other, to be driven at high speeds on public highways, and in particular on motorways, so that even places of operation located considerable distances away can be reached conveniently and rapidly.

With tractors and agricultural towing vehicles, however, the increase in the dimensions with the same requirements for ground pressure requires a disproportionate increase in ground contact surface areas. The provision of adequately large ground contact surface areas in this situation is of relevance both with regard to minimisation of the slippage losses occurring between the tyres and the ground as well as with regard to the avoidance of excessive soil compaction. Accordingly, with conventional tractors and agricultural towing vehicles it is necessary, as the dimensions of these vehicles increases, to make provision for disproportionately larger tyres. These problems also arise with the other two-axle agricultural utility vehicles and construction vehicles referred to heretofore. When larger tyre widths are provided, however, the problem arises that if the overall width of the vehicle remains the same, less space is available for engines, transmission systems and other equipment units, and in particular the space for a driver's cab arranged between the wheels is severely limited. The provision of larger tyre diameters means, among other things, that the manoeuvrability of the vehicle is restricted. In addition, large tyre diameters result in large vehicle heights, since the cabs cannot be located exclusively between the wheels. This causes problems in particular when passing bridges and gates.

In comparison with conventional two-axle utility vehicles, utility vehicles with three driven or driveable vehicle axles offer proportionately larger ground contact surfaces, such that the ground pressure exerted and the slippage occurring between the tyres and the ground are reduced. In the agricultural sector in particular, such vehicles with three driven axles have hitherto been little used. A tractor for agricultural and forestry operation with three driven vehicle axles is described, for example, in the specification CZ 288 674 B6. With this tractor, a drive assembly consisting of a combustion engine and a transmission system is mounted on a carrying structure, wherein the carrying structure is designed as a modular central-tube frame. With the tractor described in the specification CZ 288 674 B6, at least three distributor boxes with independent suspension pendulum half-axles are integrated in the modular central-tube frame. Due to the fact that the transmission system is mounted on the modular central-tube frame, a connection appropriate to the drive must be established from the transmission to the individual distribution boxes. In addition, this arrangement requires a comparatively high structural space.

US2005/109549 discloses a utility vehicle having an electric drive. The vehicle has three axles. The front and middle axles are each provided with a motor. Two axles can be driven by one motor but neither of the two axles can be switched off independently from the other. This is only possible if all three axles are provided with a motor.

The document US2005/109549 represents the closest prior art in accordance with the preamble of claim 1.

An object of the present invention is to provide a utility vehicle which, with comparatively large dimensioning of the vehicle, provides an adequately large contact surface area and with which the drive connection between a drive unit and the driven vehicle axles is designed to be space-saving and simple, as well as impervious to dirt.

The object of the present invention is solved by the features provided in the independent claim 1. Further preferred embodiments are provided in the dependent claims 2 to 22.

According to the present invention there is provided a utility vehicle, comprising a front axle, a middle axle and a rear axle, an adjustable transmission arrangement, which has two adjustable transmission units each being designed integrally in a longitudinal frame element which is designed to be at least partially hollow, and which runs longitudinally and essentially centrally in the utility vehicle, and respective drive outputs of the adjustable transmission units lead into a cavity of the frame element, wherein a drive input of the transmission arrangement is connected in respect of a drive unit and a drive output of the transmission arrangement is connected in respect of the drive to the three axles in such a way that the three axles can be driven by one of the transmission units.

By providing two adjustable transmission units, each unit can have smaller dimensions and also only need to transfer a relatively low output. Because of the smaller dimensions, the vehicle height can be reduced.

Preferably the two (or more) adjustable transmission units are designed as steplessly adjustable transmission units, since as a result of this a synchronisation can be established between the individual transmission units and therefore also between the vehicle axles driven by the individual transmission units.

According to the present invention, a drive output from the transmission arrangement is connected in respect of the drive to the minimum of three vehicle axles in such a way that the minimum of three vehicle axles can be driven from the minimum of two adjustable transmission units. The individually adjustable transmission units can be connected in each case in respect of the drive to less than the three driveable vehicle axles, such that an adjustable transmission unit is allocated in each case to only one or two vehicle axles. In this case at least one adjustable transmission unit of the adjustable transmission arrangement is allocated to each of the minimum of three driveable vehicle axles.

In addition to the adjustable transmission units, the adjustable transmission arrangement can also have further transmission units, such as, for example, an axle differential gear unit and/or a transfer gear unit. The drive can be represented, for example, by a combustion engine. As an alternative, an electric motor can also be provided.

The longitudinal and at least partially hollow frame element can, for example, be designed as essentially tubular and extends essentially centrally and in the longitudinal direction of the utility vehicle. In this situation it is not absolutely essential for the tubular frame element to have a circular cross-section, but other types of cross-section or even a partially open design, such as in a U-shape, are also possible (in the cross-section transverse to the longitudinal direction). In the case of a U-shaped frame element, the cavity referred to in Claim 1 is formed by the space which is enclosed by the U-profile. In this case, the profile is open to one side. A closed design of the hollow space of the frame element has the advantage over this, however, in that the parts of the drive connection provided therein are protected against dirt and external force effects, such as earth thrown upwards from the ground.

According to the present invention, provision is made for an adjustable transmission unit to be designed integrally in the frame element. In the present connection, this is understood to mean both the situation in which the adjustable transmission unit is designed to be in the cavity of the frame element and the situation in which a housing of the adjustable transmission unit itself forms a part of the frame element. In the latter case provision can be made for the housing of the adjustable transmission unit to be designed as of one piece with the frame element, or for part segments of the frame element to be secured in each case to the housing of the adjustable transmission unit.

Due to the fact that, according to the present invention, provision is made for an adjustable transmission unit to be designed integrally in the frame element and a drive output from the adjustable transmission unit leads into the cavity of the frame element, the required structural space for the adjustable transmission units is reduced to a minimum. The respective drive connections between the adjustable transmission units and the individual driveable vehicle axles can at least partially be guided in the cavity of the frame element, with the result that a space-saving accommodation for this drive connection is also guaranteed. In addition, the adjustable transmission units and the drive connections are protected by the arrangement according to the invention against dirt and the effects of external forces, which occur, for example, through earth thrown up from the ground.

Due to the extension of the frame element essentially centrally and in the longitudinal direction of the utility vehicle, the frame element exerts a carrying function and at the same time offers a protective and space-saving accommodation for the adjustable transmission units and at least a part of the drive connection (between the adjustable transmission unit and the driveable vehicle axles).

Due to the fact that at least three driveable vehicle axles are provided, a comparatively large ground contact surface can be provided without the tyre diameters and/or the tyre widths having to be dimensioned overly large. Due to the provision of a large ground contact surface, it is possible, despite the large dimensions of the utility vehicle for the ground pressure and the slippage occurring between the wheels and the ground to be kept low.

If the minimum of one adjustable transmission unit is infinitely adjustable, then provision is made according to an advantageous further embodiment for this to be provided by an electro-mechanically split-output transmission unit, by a generator and at least one electric motor, by a hydrodynamic-mechanical split-output transmission unit, by a mechanical steplessly adjustable transmission unit (bevel gear drive, CVT (continuously variable transmission)) or, preferably, by a hydrostatic-mechanical split-output transmission unit. As is generally known, these types of drive can in each case be steplessly adjusted by an appropriate actuator. The hydrostatic-mechanical split-output transmission unit in particular is used in agricultural utility vehicles, and in particular in large tractors and agricultural towing vehicles, and can be adjusted by appropriate actuation of the hydrostatic splitting.

According to an advantageous further embodiment of the invention, provision is made for the minimum of one steplessly adjustable transmission unit to be formed by at least one hydrostatic-mechanically split-output transmission unit, wherein the drive input of the steplessly adjustable transmission unit leads to a planetary gear train with crank, which splits the incoming drive output into one hydrostatic and one mechanical branch, wherein the hydrostatic branch has an adjustable hydraulic pump and at least one, and preferably two, adjustable hydraulic motors driven by the hydraulic pump, and wherein the drive outputs from the minimum of one hydraulic motor and from the mechanical branch upstream of the drive output of the steplessly adjustable transmission unit are combined onto one drive shaft.

By adjusting the hydraulic pump, the hydrostatic-mechanically split-output transmission unit can be adjusted accordingly. In addition, provision can be made for the minimum of one hydraulic motor to be likewise adjustable. By adjusting the hydraulic pump (and, if appropriate, the minimum of one hydraulic motor), the hydrostatically-transferred portion and therefore also simultaneously the mechanically-transferred portion of the hydrostatic-mechanically split-output transmission unit can be adjusted.

By the provision of more than only one hydraulic motor, the individual hydraulic motors can be allocated to specific vehicle axles and connected in respect of the drive to these vehicle axles. If two hydraulic motors are provided, provision can be made, for example, for one hydraulic motor to drive one vehicle axle, such as the rear axle, and for the other hydraulic motor to drive two vehicle axles, such as the front axle and the middle axle. It is of course also possible for three or more hydraulic motors to be provided, which are then allocated to corresponding vehicle axles. Due to the accommodation, according to a further embodiment, of the hydrostatic and mechanical branches inside the hydrostatic-mechanically split-output transmission unit, designed integrally in the frame element, the individual components of the hydrostatic and mechanical branches can be protected against dirt and the effects of external force. In addition, a space-saving arrangement can also be achieved in this way.

Preferably provision is made for at least one of the vehicle axles, preferably the front axle and/or the middle axle, to be separable from the drive connection of the adjustable transmission arrangement by means of a separation clutch. In particular when travelling at higher speeds and/or with small towing loads, it is advantageous for two of the minimum of three driveable vehicle axles, in particular the front axle and the middle axle, to be separated from the drive connection, such that a purely rear wheel drive is provided.

According to an advantageous further embodiment, provision is made for the adjustable transmission arrangement to have two steplessly adjustable motors, preferably hydraulic motors, wherein a first motor is connected in respect of drive to two vehicle axles, preferably the front axle and the middle axle, and the second motor is connected to one vehicle axle, preferably the rear axle. Accordingly, by adjusting the two steplessly adjustable motors, the ratio can be adjusted between the drive output which is transferred via the front axle and the middle axle and the drive output transferred via the rear axle. With another allocation of the two steplessly adjustable motors to the individual vehicle axles, for example of the first motor to the front axle and of the second motor to the middle axle and the rear axle, the ratio of the drive outputs of these two vehicle axle groupings can be adjusted accordingly.

As an alternative, provision can be made for the adjustable transmission arrangement to have three steplessly adjustable motors, preferably hydraulic motors, wherein in each case each vehicle axle is connected in respect of drive to a motor. By adjusting the individual motors, in this case a ratio of the drive output values transferred from the individual vehicle axles can be adjusted. The provision of more than only one steplessly adjustable motor has the advantage in this situation that an associated drive shaft can be allocated to each motor and accordingly a space-saving accommodation of the drive connections between the individual motor and the vehicle axle(s) pertaining to it can be provided in a space-saving and structurally simple manner.

According to an advantageous further embodiment of the invention, a steplessly adjustable transmission arrangement is formed by two steplessly adjustable transmission units, which are arranged in relation to the longitudinal direction of the frame element behind one another integrally in the frame element. By the provision of two steplessly adjustable transmission units and by the arrangement of these behind one another in the longitudinal direction of the frame element, the output torque of these transmission units can be divided advantageously onto the minimum of three driveable vehicle axles. In particular, in this case the drive connections can be guided directly from the individual steplessly adjustable transmission units to the vehicle axles allocated to them in a structurally simple manner inside the cavity of the frame element.

Preferably, with the provision of two steplessly adjustable transmission units, a first steplessly adjustable transmission unit can be connected in respect of drive to two vehicle axles, preferably to the front axle and the middle axle, and the second steplessly adjustable transmission unit to one vehicle axle, preferably the rear axle. By way of the preferred allocation of the second steplessly adjustable transmission unit to the rear axle, the first steplessly adjustable transmission unit can be actuated as the vehicle's speed increases in such a manner that the drive output transferred from this transmission unit is reduced, and at high speeds a rear axle drive exclusively is put into effect.

As an alternative to the preferred further embodiment, however, provision can also be made for the first steplessly adjustable transmission unit to be connected in respect of drive to the front axle and for the second steplessly adjustable transmission unit to be connected in respect of drive to the middle axle and the rear axle. This latter arrangement of the first and second steplessly adjustable transmission units can be advantageous in particular with self-propelled agricultural working machines, such as combine harvesters and forage harvesters.

Preferably the first steplessly adjustable transmission unit is arranged in the frame element at a position between the front axle and the middle axle and the second steplessly adjustable transmission unit is arranged in the frame element at a position between the middle axle and the rear axle. Regardless of which of the two allocations described above of the first and second steplessly adjustable transmission units is applied to the three vehicle axles, with such a positioning of the first and second steplessly adjustable transmission units the drive connection between the individual steplessly adjustable transmission units and the vehicle axle(s) pertaining to them can be arranged in a space-saving and structurally simple manner. Preferably, the drive connection between the two steplessly adjustable transmission units and the individual vehicle axles can be formed at least partially in the cavity of the frame element, such that it is protected against dirt and the effects of external forces.

According to an advantageous further embodiment of the invention, a switchable clutch is provided between the first steplessly adjustable transmission unit and the front axle, by means of which the drive connection between the first steplessly adjustable transmission unit and the front axle can be separated, wherein the clutch is designed preferably integrally in the frame element. As a result, the front axle can be separated from the drive connection. The clutch can, for example, also be a steplessly switchable clutch. This is advantageous inasmuch as the revolution speed ratio of two axles allocated to one transmission unit can be adjusted independently of one another. Accordingly, the torque transferred from all the axles can also be adjusted independently of one another.

Due to the integral arrangement of the clutch in the frame element, a space-saving and structurally simple arrangement can be attained. The provision of such a switchable clutch is advantageous in particular if the first steplessly adjustable transmission unit is connected in respect of drive to the front axle and the middle axle, and accordingly, with the clutch disengaged, only the middle axle can be driven by the first steplessly adjustable transmission unit. The provision of such a switchable clutch to separate the drive connection of one or more vehicle axles is in general always advantageous if more than only one vehicle axle is being driven by an allocated adjustable transmission unit. In particular, with an allocation of the first steplessly adjustable transmission unit to the front axle and the middle axle, a switchable clutch can also be provided between the first steplessly adjustable transmission unit and the middle axle, by means of which the drive connection between the first steplessly adjustable transmission unit and the middle axle is separable, wherein the clutch is preferably designed integrally in the frame element.

According to an advantageous further embodiment of the invention, a drive connection can be established between the first and second adjustable transmission units by means of a switchable emergency clutch, such that, in the event of the failure of a transmission unit, this unit can be driven by the other unit by engaging the emergency clutch. If such an emergency clutch is provided, it is preferred if one or both of the steplessly adjustable transmission units can be brought into an emergency operation position in which a drive input of the transmission unit concerned is separated in respect of drive from a drive output of this transmission unit. This means that, in the emergency operation position, a torque force transferred onto the drive input is not transferred to the drive output, and that, conversely, a torque force applied onto the drive output is not transferred onto the drive input. If the transmission unit is defective, it is brought into this emergency position and its drive output, in particular its drive output shaft, can then be driven via the engaged emergency clutch by the other intact steplessly adjustable transmission unit in each case. An analogous arrangement is also possible if more than only two adjustable transmission units are provided.

Provision can further be made that, in the event of the failure of one of the two adjustable transmission units, an electronic motor limitation is activated, by means of which the output produced by the drive is limited, such that the rated output transferred from the one intact adjustable transmission unit does not exceed a limit value determined for this transmission unit. By provision of the switchable emergency clutch, it is possible, even in the event of the failure of one of the two adjustable transmission units on difficult terrain, for all-wheel drive to be provided. As a result, the utility vehicle can still be driven safely from the particular place of use, such as a field or a woodland area, and taken to a workshop.

According to an advantageous further embodiment, provision can be made for a transfer gear to be arranged between the drive and the two adjustable transmission units, by means of which a drive output from the drive is divided at least partially onto both the adjustable transmission units. In addition, provision can be made for a part of the drive output to be taken off directly at the transfer gear or also upstream or downstream of the transfer gear, for example for a power take-off shaft. Preferably, the transfer gear has two take-off shafts, which in each case lead to the two adjustable transmission units and are coupled to one another in such a way that they rotate at the same revolution speed. This can be achieved, for example, if the two drive shafts are rigidly connected to one another. By the provision of such a transfer gear, the drive output of the drive is divided in a simple manner onto both the adjustable transmission units.

According to a further advantageous embodiment, the transfer gear is secured on the outside of the frame element, wherein preferably it is flanged to a housing of the second adjustable transmission unit. By the securing of the transfer gear to the outside of the frame element, the drive shafts of the transfer gear can be guided directly into the frame element and therefore to the first and second adjustable transmission units. As a result of this, the take-off shafts of the transfer gear can be guided in a space-saving and protected manner along the frame element. Preferably, the drive, such as a combustion engine, is also mounted with suspension above the frame element on an ancillary frame connected to the frame element, such that a drive connection runs between the drive and the transfer gear outside the cavity of the frame element and is designed simply and short. Due to the fact that the transfer gear is flanged to a housing of the second adjustable transmission unit, the drive shaft leading to the second adjustable transmission unit can be introduced directly into the housing of the second adjustable transmission unit and is therefore not exposed.

According to an advantageous further embodiment of the invention, the minimum of three vehicle axles each have axle differential gear units, which preferably are designed integrally in the frame element. The term "integral design" in this context is understood to mean the situation in which the individual axle differential gear units are designed to be in the cavity of the frame element, or in which a housing of the individual axle differential gear unit forms a part of the frame element. According to an advantageous further embodiment, the drive connections, which preferably are designed as drive shafts, run from the drive output(s) of the adjustable transmission units to the individual differential gear units of the three vehicle axles in the frame element, designed hollow in these sections. As a result, the drive connections are protected from dirt and external force effects and a space-saving arrangement is attained. Preferably, the frame element has a plurality of essentially tubular housing sections, which extend between the minimum of one adjustable transmission unit and the axle differential gears. In this situation, it is not absolutely necessary for the tubular housing sections to be circular in cross-section. Rather, other types of cross-sections, such as a rectangular cross-section, are also possible.

According to an advantageous further embodiment, a control unit is provided, by means of which the torque forces can be adjusted which are transferred from the steplessly adjustable transmission units and/or from the minimum of three driveable vehicle axles. As a result of this, by means of the control unit as a function of the individual travel status the torque values transferred from the individual vehicles axles can be optimally adjusted. In particular, provision can be made in this situation for the current travel status of the utility vehicle to be detected by means of sensors and the control unit to adjust the transferred torque values as a function of the travel status determined in each case.

According to an advantageous further embodiment of the invention, all the wheels provided on the minimum of three vehicle axles are equipped with an anti-locking braking system. According to an advantageous further embodiment of the invention, the front axle and the rear axle are designed as steerable vehicle axles. Preferably, the steering of the front axle is effected mechanically with hydraulic support and the steering of the rear axle is effected exclusively hydraulically. As a result, the steering of the rear axle can be blocked in a simple manner in specific operational states, such as at high travel speeds, with the result that no steering angle at the rear axle is possible any longer. Provision can further be made for the transmission of the steering of the front axle and/or of the rear axle to be adjusted as a function of the speed. According to an advantageous further embodiment of the invention, the middle axle is designed as a non-steerable vehicle axle. Preferably, the middle axle can be raised by an allocated raising mechanism. As a result, the middle axle can be raised in specific operational states, such as at high travel speeds. The further embodiments referred to in this paragraph make it possible, among other things, for the utility vehicle to be driven at a maximum speed of 62 km/h and, thanks to this high speed capacity, it can also be approved for travelling on motorways and main highways.

According to an advantageous further embodiment of the invention, the minimum of three vehicle axles are designed as swing axles or semi-swing axles, with spring suspension, or the minimum of three vehicle axles have in each case an individual wheel-suspension arrangement, with spring suspension, per tyre. Moreover, according to an advantageous further embodiment provision is made for all the wheels or caterpillar track units provided on the minimum of three vehicle axles to have spring suspension units pertaining to them, wherein the spring suspension units of the individual wheels or caterpillar track elements can be adjusted by means of one control unit. Preferably, in this situation the control unit is arranged in such a way that it actuates the spring suspension units as a function of the travel states in each case, in particular as a function of the travel speed, the bend radius, and/or the inclination of the vehicle. These further features substantially improve travel comfort. Moreover, the actuation of the spring suspension units as a function of the particular use of the utility vehicle allows for the travel behaviour to be adjusted to the different travel states which arise, for example, with fast travel on the road, when travelling in a field, or when travelling through woodland.

According to an advantageous embodiment of the invention, the drive for the vehicle is provided by a drive engine, preferably a combustion engine, which is mounted on a box frame secured to the frame element.

Moreover, according to an advantageous further embodiment the rear axle can be raised by an associated raising mechanism. This enables a smaller turning circle to be achieved. According to an advantageous further embodiment of the invention, provision is made for all the wheels provided on the minimum of three vehicle axles to have a tyre diameter of at least 35 inches, preferably from 36 to 40 inches. As a result of this, the contact surface areas of the utility vehicle are increased and any slippage between the tyres and the ground can be minimised.

According to an advantageous embodiment of the invention, the utility vehicle has at least one structural attachment area. A structural attachment area can be formed in particular by a rear lifting mechanism, a front lifting mechanism or a flatbed unit. In addition, a coupling device can be arranged in the structural attachment area, which can be used for coupling to a semi-trailer in the form of a fifth-wheel coupling. Such a utility vehicle with at least one structural attachment area is formed, for example, by a field tractor, a combine harvester, a forage harvester, self-propelled spraying vehicles, or by other types of utility vehicles with single/multi-purpose attachments. Preferably, provision is made for the utility vehicle with at least one structural attachment area to also have the further features which are required to achieve high speed capability, in particular on motorways and main highways.

In accordance with a further aspect of the invention there is provided a method of synchronising the two adjustable transmission units, wherein a reference value is conducted as an input value to a first adjustment unit of the first transmission unit, and the first transmission unit is adjusted by means of the first adjustment unit to the reference value, and a controlled variable is determined from at least one first output value of the first transmission unit and at least one second output value of the second adjustable transmission unit, and the controlled variable is mathematically linked to the reference value, and a result value of the mathematical linking serves in each case as an input value for a second adjustment unit of the second transmission unit, and that the second transmission unit is adjusted by means of the second adjustment unit to the result value.

Further advantages and purposes of the invention result on the basis of the following description of embodiments, making reference to the appended figures. The figures show:
- Fig. 1: A diagrammatic cross-sectional representation of a tractor with three driveable vehicle axles, wherein the cross-section is represented along the longitudinal direction of the tractor;
- Fig. 2: A diagrammatic representation of the drive system of the tractor represented in Fig. 1 in a plan view from above;
- Fig. 3: The diagrammatic representation shown in Fig. 2 of the drive arrangement, with a detailed representation of the individual transmission units;
- Fig. 4: A diagrammatic representation of a steplessly adjustable hydrostatic-mechanically split-output transmission unit according to a first embodiment;
- Fig. 5: A diagrammatic representation of a steplessly adjustable hydrostatic-mechanically split-output transmission unit according to a second embodiment;
- Fig. 6A: A cross-section along the longitudinal direction of the utility vehicle through the two steplessly adjustable transmission units and the transfer gear unit;
- Fig. 6B: An enlarged representation of a section from Fig. 6A; and
- Fig. 7: A principle sketch representing a method of synchronising two transmission units.

The details of direction and location cited in the foregoing and following description, such as "top", "bottom", "front", "rear" and "in the direction of travel", relate to the reference system of the utility vehicle. These details are not to be regarded as restrictive.

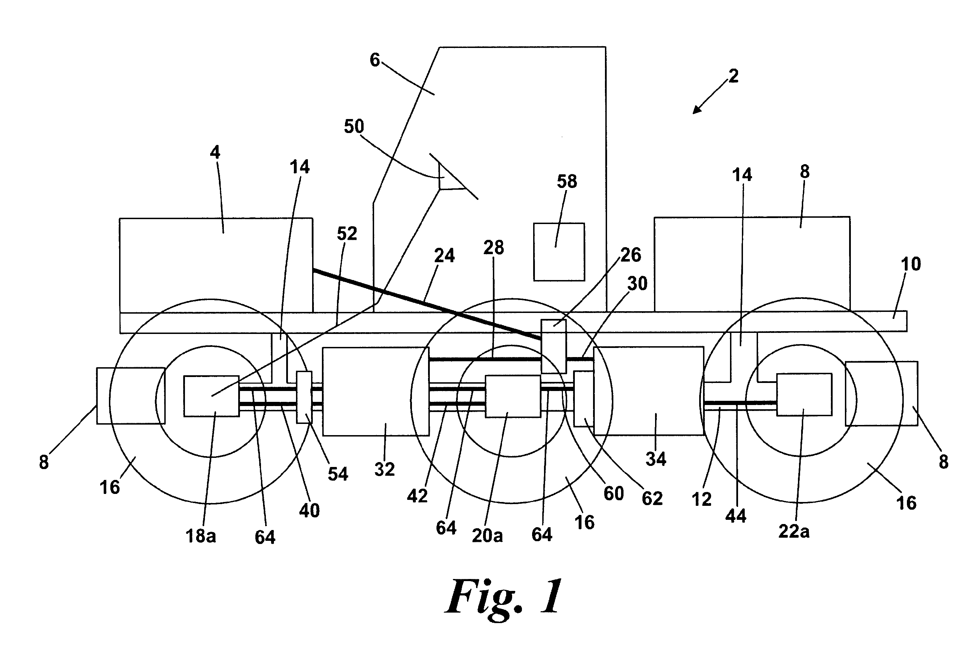

The tractor 2 represented in Fig. 1 has a combustion engine 4, a driver's cab 6 and various different attachment devices 8 conventionally used in agriculture on the front and rear of the tractor 2. The combustion engine 4, the cab 6 and one of the attachment devices 8 are mounted on a box frame 10 and secured to it. The box frame 10 is arranged above a longitudinal frame element 12, designed to be at least partially hollow, which runs longitudinally and essentially centrally in respect of the tractor 2. The box frame 10 is connected to the frame element 12 by means of at least two transverse braces 14 running upwards from the frame element 12. In addition, the six wheels 16 of the tractor 2 are suspended at the frame element 12. As becomes clear on the basis of the following description, the frame element 12 serves to accommodate at least one adjustable transmission element and the drive connections which lead away from the minimum of one adjustable transmission unit.

The box frame 10, frame element 12 and transverse braces 14 together form a chassis.

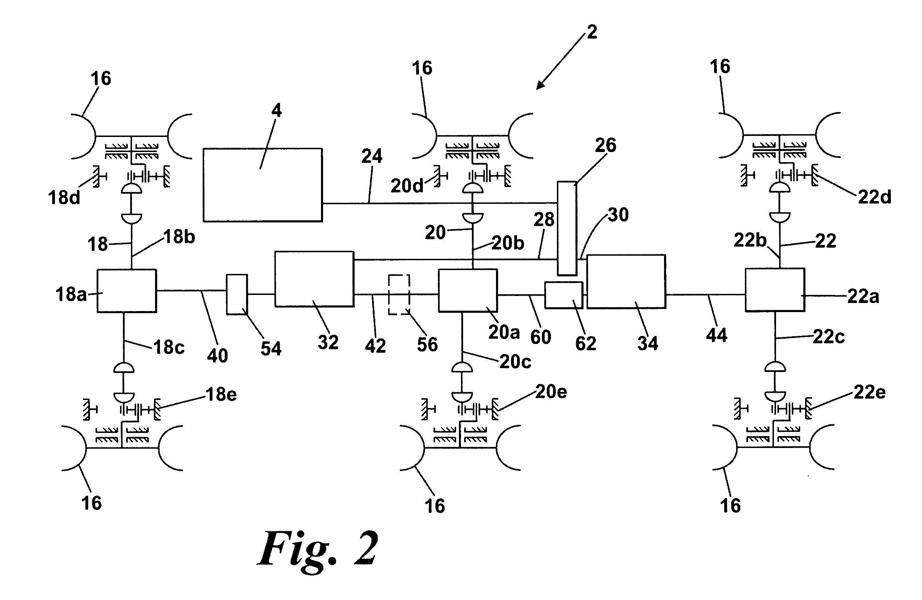

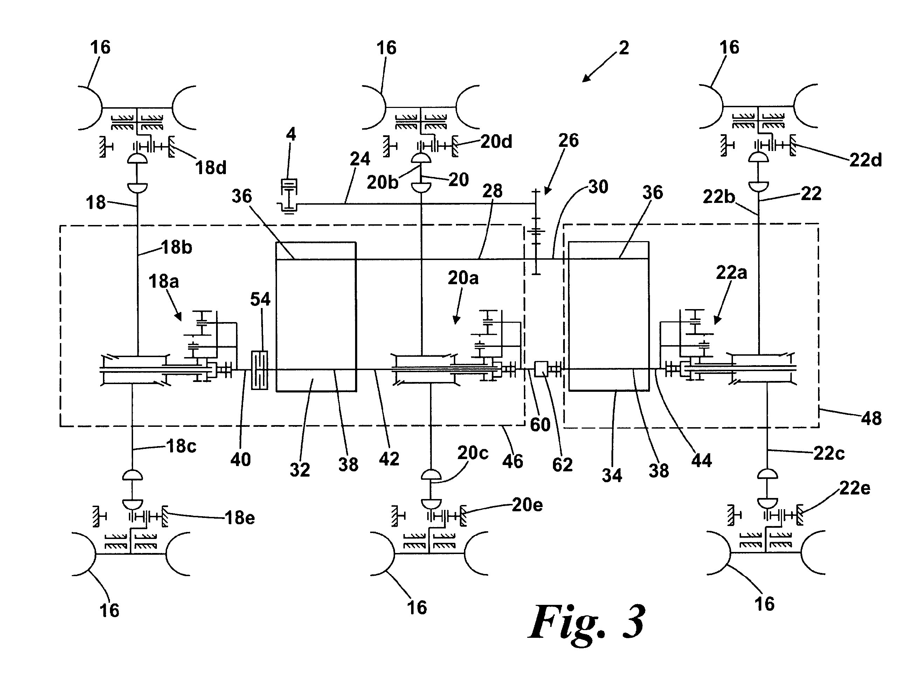

The drive system of the tractor 2 is described hereinafter by reference to Figs. 1 to 3. As can be seen on the basis of Fig. 2, the tractor 2 has a front axle 18, a middle axle 20 and a rear axle 22. The three vehicle axles 18, 20, and 22 in each case have associated axle differential gear units 18a, 20a, and 22a. The axle transmission gear units 18a, 20a and 22a are also represented in the diagrammatic representation in Fig. 1. As can be seen on the basis of Fig. 1, the axle differential gear units 18a, 20a, and 22a are formed integrally in the frame element 12, wherein the housings of the axle differential gear units 18a, 20a, and 22a in each case form a part of the frame element 12. The combustion engine 4 is coupled by means of a jointed shaft 24 to a transfer gear unit 26. As can be seen in particular on the basis of the detailed representation of the transfer gear unit 26 in Fig. 3, the drive torque is divided in the transfer gear unit 26 onto a front 28 and a rear 30 power take-off shaft. The front 28 and rear 30 power take-off shafts are rigidly connected to one another, such that both the power take-off shafts 28, 30, rotated at the same revolution speed.

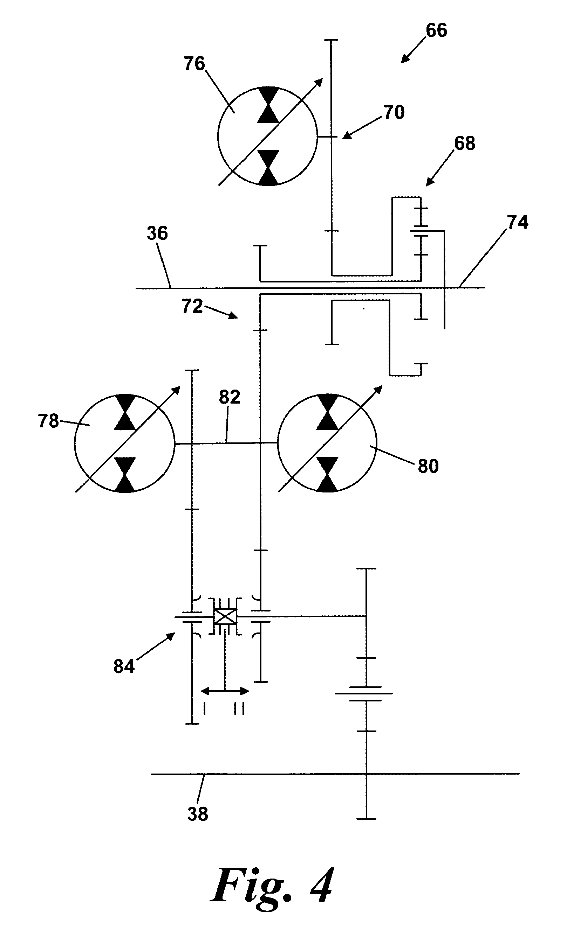

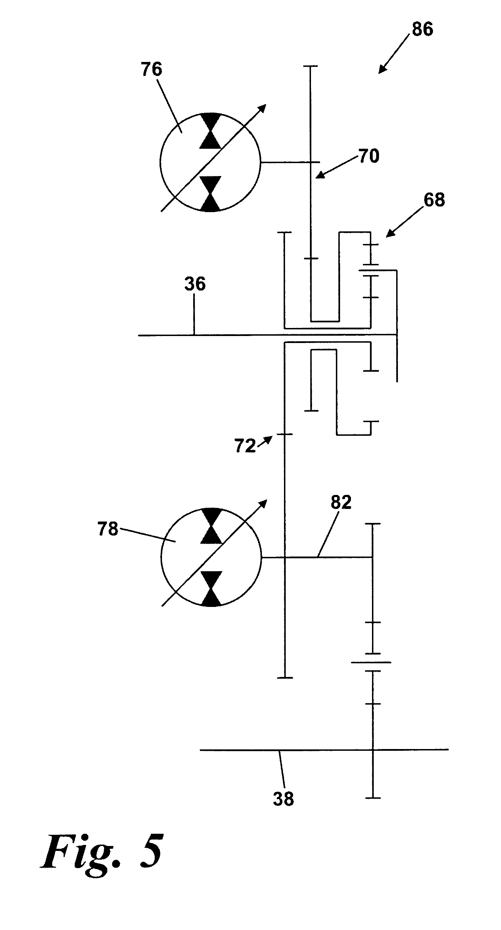

The front take-off shaft 28 of the transfer gear 26 leads to the first steplessly adjustable transmission unit 32, which is designed integrally in the frame element 12, wherein a housing of the first steplessly adjustable transmission unit 32 forms a part of the frame element 12. The rear take-off shaft 30 of the transfer gear 26 leads to a second steplessly adjustable transmission unit 34, which is designed integrally in the frame element 12, wherein in turn a housing of the second steplessly adjustable transmission unit 34 forms a part of the frame element 12. The two steplessly adjustable transmission units 32, 34, are formed in each case by a hydrostatic-mechanically split-output transmission unit. As can be seen on the basis of Fig. 3, the two steplessly adjustable hydrostatic-mechanical transmission units 32, 34, each have an input shaft 36 and a take-off shaft 38. In each case the torque force from the associated take-off shaft 28 and 30 respectively of the transfer gear 26 is transferred onto the input shaft 36. The incoming drive output is then divided onto one hydrostatic and one mechanical branch, wherein the output transferred from the hydrostatic branch is adjustable. This is explained in detail by reference to Figs. 4 and 5. The output transferred from the hydrostatic and the mechanical branch is then conducted together onto the take-off shaft 38.

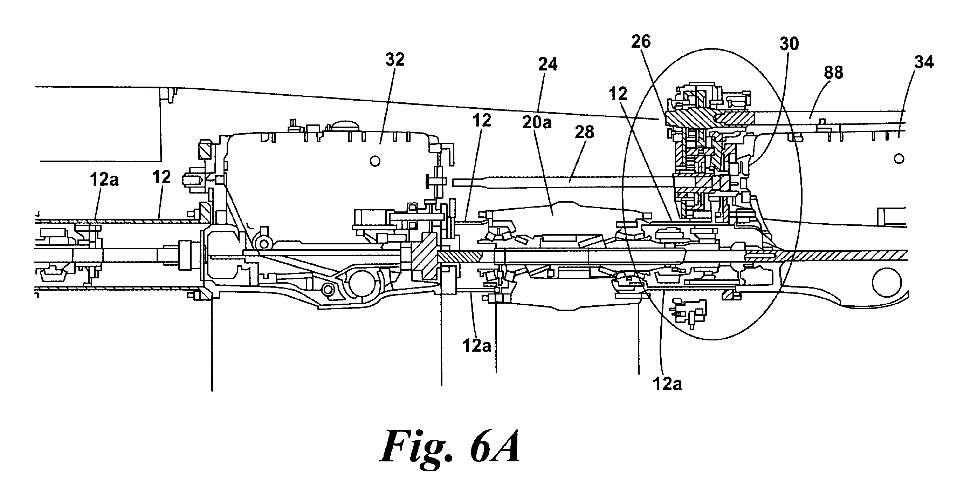

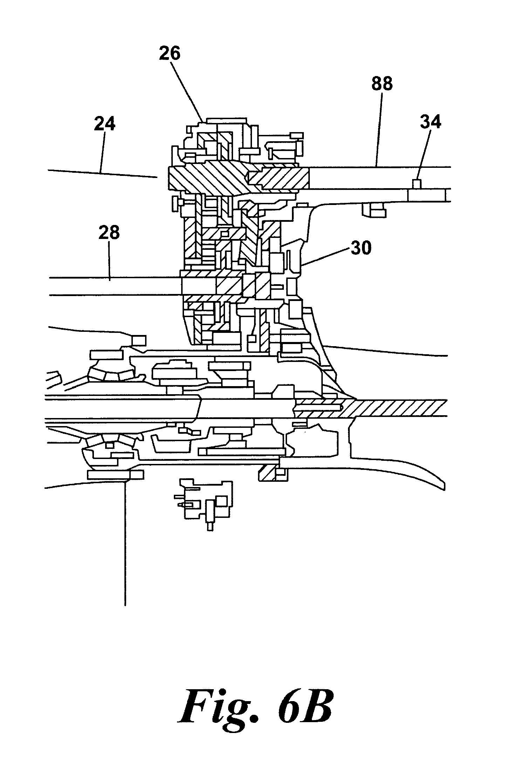

As is explained in greater detail by reference to Figs. 6A and 6B, the transfer gear 26 is flanged to the second steplessly adjustable transmission unit 34.

The first steplessly adjustable transmission unit 32 serves to drive the front axle 18 and the middle axle 20. In particular, the take-off shaft 38 of the first steplessly adjustable transmission unit 32 is rigidly connected to a front axle drive shaft 40, which leads to the axle differential gear unit 18a of the front axle 18. In addition, the take-off shaft 38 of the first steplessly adjustable transmission unit 32 is rigidly connected to a middle axle drive shaft 42, which leads to the axle differential gear unit 20a of the middle axle 20.

The second steplessly adjustable transmission unit 34 serves to drive the rear axle 22. In particular, the take-off shaft 38 of the second steplessly adjustable transmission unit 34 is rigidly connected to a rear axle drive shaft 44, which leads to the axle differential gear unit 22a of the rear axle 22. Accordingly, during normal operation the first steplessly adjustable transmission unit 32 is allocated to the front axle 18 and the middle axle 20, as represented by the broken-line box 46 in Fig. 3. In addition, in normal operation the second steplessly adjustable transmission unit 34 is allocated to the rear axle 22, as represented in diagrammatic form by the second broken-line box 48.

The two steplessly adjustable transmission units 32, 34 serve in each case to change a transmission ratio. By contrast, the transfer gear 26 serves solely to distribute the input torque from the combustion engine 4 onto the two steplessly adjustable transmission units 32, 34. As explained heretofore, both the two steplessly adjustable transmission units 32, 34, as well as the axle differential gear units 18a, 20a, and 22a of the three vehicle axles 18, 20, and 22 are formed integrally in the frame element 12. Together with the drive connections formed between the two steplessly adjustable transmission units 32, 34 and the individual axle differential gear units 18a, 20a, and 22a, the two steplessly adjustable transmission units 32, 34 and the axle differential gear units 18a, 20a, and 22a form the transmission composite. This transmission composite is formed integrally in the frame element 12, wherein the housing of the axle differential gear units 18a, 20a, and 22a, as well as the housing of the two steplessly adjustable transmission units 32 and 34 in each case form a part of the frame element. As can be seen on the basis of the diagrammatic representation from Fig. 1, the frame element 12 is formed by tubular intermediate housings 12a between the individual housings of the axle differential gear units 18a, 20a, and 22a and the two steplessly adjustable transmission units 32, 34, these housings extending in the longitudinal direction of the tractor 2. In the cavities of the intermediate housings 12a, the drive connections are guided between the steplessly adjustable transmission units 32, 34 and the individual axle differential gear units 18a, 20a, and 22a. These drive connections comprise in particular the front axle drive shaft 40, the middle axle drive shaft 42, and the rear axle drive shaft 44 already described, as well as the other drive-associated connections inside the frame element 12, which will be explained further hereinafter. The transfer gear 26 does not itself form a part of the transmission composite. Rather, the two take-off shafts 28, 30 of the transfer gear 26 lead firstly into the transmission composite and therefore also into the frame element 12.

The three vehicle axles 18, 20, and 22 are in each case designed as pendulum half-axles 18b, 18c, 20b, 20c, 22b, 22c, the spring suspensions of which, 18d, 18e, 20d, 20e, 22d, 22e can be adjusted individually and independently of one another. As already explained earlier, this adjustment can be carried out as a function of the operational status of the tractor 2, such as, for example, the vehicle speed, wherein in particular a spring characteristic curve, a position of the individual axles, etc. can be adjusted. In addition, all the wheels 16 are equipped with an anti-lock braking system (ABS). The front axle 18 and the rear axle 22 are in each case designed as steerable axles, wherein the steering of the front axle 18 is implemented by mechanical means with hydraulic support and the steering of the rear axle 22 is exclusively hydraulic. In this respect the front axle 18 is mechanically connected to a steering device 50 in the driver's cab 6, wherein this connection is represented in Fig. 1 in diagrammatic form by the line 52. The steering of the rear axle 22 is lockable. The middle axle 20 is designed as a non-steerable vehicle axle, and in certain operational states, such as road travel and/or low traction force requirements, can be raised by an associated raising mechanism (not shown). In the raised state, the middle axle 20 then no longer has contact with the ground.

As can be seen on the basis of Fig. 1, the first adjustable transmission unit 32 is arranged in the frame element 12 at a position between the front axle 18 and the middle axle 20. The second steplessly adjustable transmission unit 34 is arranged in the frame element 12 at a position between the middle axle 20 and the rear axle 22. In the drive connection between the first steplessly adjustable transmission unit 32 and the axle differential gear unit 18a of the front axle 18 an all-wheel clutch 54 is provided, by means of which the drive connection between the first steplessly adjustable transmission unit 32 and the front axle 18 can be separated. The clutch 54 is likewise designed integrally in the frame element 12, wherein a housing of the all-wheel clutch 54 forms a part of the frame element 12. As is represented in Fig. 2 by the broken line, a further switchable clutch 56 can also be provided between the first steplessly adjustable transmission unit 32 and the middle axle 20, by means of which the drive connection between the first steplessly adjustable transmission unit 32 and the middle axle 20 can be separated. This further switchable clutch 56 is preferably designed integrally in the frame element 12, wherein a housing of the switchable clutch 56 forms a part of the frame element 12.

As already explained heretofore, a control unit 58 is provided, by means of which the torque force transferred from the two steplessly adjustable transmission units 32 and 34 and the torque forces transferred from the three vehicle axles 18, 20 and 22 are adjusted and matched to one another. As a result, for example, the traction force distribution between the three vehicle axles 18, 20, and 22, or with the middle axle raised, between the front axle 18 and the rear axle 22, can be adjusted according to the conditions of use. The control unit 58 is represented diagrammatically in Fig. 1 by a box.

In order to be able to have the all-wheel drive available even in the event of the failure of one of the steplessly adjustable transmission units 32, 34, as is necessary for example in difficult terrain and/or with high loading, the tractor 2 also has an emergency running device. For this purpose, a connection drive shaft 60 is provided between the second steplessly adjustable transmission unit 34 and the axle differential gear 20a of the middle axle 20. A drive connection between the second steplessly adjustable transmission unit 34 and the axle differential gear 20a of the middle axle 20 can be established in this situation by way of the connection drive shaft 60 by engaging an emergency clutch 62, which under normal operating conditions is disengaged. By engaging the emergency clutch 62, a drive connection can be established between the first 32 and the second 34 steplessly adjustable transmission unit by way of the connection drive shaft 60, the emergency clutch 62, the axle differential gear unit 20a of the middle axle 20 and the middle axle drive shaft 42. As already explained heretofore, in the event of the failure of one of the two steplessly adjustable transmission units 32 or 34, the input shaft 36 and the take-off shaft 38 of this transmission unit 32 or 34 respectively are decoupled from one another. This means that in this emergency setting of the steplessly adjustable transmission unit 32 or 34 a torque force transferred onto the input shaft 36 will not be transferred onto the take-off shaft 38 and vice-versa. Accordingly, if one of the two steplessly adjustable transmission units 32, 34 fails, it will be electronically or mechanically (by means of what is referred to as an emergency actuation) brought into the emergency setting, and the take-off shaft 38 of the defective steplessly adjustable transmission unit 32 will be driven by way of the drive connection, which in this case is formed by the middle axle drive shaft 42, the axle differential gear unit 20a of the middle axle 20 and the connection drive shaft 60 and the engaged emergency clutch 62.

If, for example, the first steplessly adjustable transmission unit 32 fails, then, without the emergency operating device being provided, the front axle 18 and the middle axle 20 would no longer be driveable. By engaging the emergency clutch 62, however, as described above, the take-off shaft 38 of the first steplessly adjustable transmission unit 32 is driven by the second steplessly adjustable transmission unit 34, and therefore the front axle 18 and the middle axle 20. In this case, therefore, the second steplessly adjustable transmission unit 34 drives all three vehicle axles 18, 20, and 22.

The output transferred from one of the two steplessly adjustable transmission units 32, 34 is, as a rule, limited. For example, this maximum transferable output can amount to 280 kW. The maximum output which can be provided by the tractor 2 is, as a rule, higher, such as approximately 400 kW. In the event of a failure of one of the two steplessly adjustable transmission units 32, 34, it can be guaranteed, if appropriate by means of an electronic engine governing arrangement, that it is not the maximum output of the tractor 2 which is transferred via the still intact steplessly adjustable transmission unit 32 or 34, since this can lead to damage to the unit 32 or 34. As already explained earlier, the emergency device serves predominantly to provide the all-wheel drive at least for a journey from the field or the woodland concerned and to make a journey possible to the nearest workshop. In the diagrammatic representation from Fig. 1, the drive connection which is formed in the event of the failure of one of the steplessly adjustable transmission units 32 or 34 respectively by engaging the emergency clutch 62 is shown by the thick line 64. In the area between the axle differential gear units 18a and 20a of the front axle 18 and the middle axle 20, this line 64 is drawn separately from the front axle drive shaft 40 and the middle axle drive shaft 42. This separate representation serves solely as illustration. As can be seen on the basis of the Figures 2 and 3, the drive connection is effected via the front axle drive shaft 40 and the middle axle drive shaft 42 even with the emergency clutch 62 engaged.

The wheels 16 of the tractor 2 in each case have a tyre diameter of 38 inches. This allows for an adequately large ground contact area of the tractor 2 to be provided.

In addition to this, the embodiment is also conceivable in which the middle axle 20 is optionally driven by the first steplessly adjustable transmission unit 32 or by the second steplessly adjustable transmission unit 34. This can be achieved by the clutches 56, 62 represented in Figure 2. In this situation, the clutch 62 is not designed in this embodiment as an emergency clutch, but the clutches 56, 62 can be designed as switchable or steplessly switchable clutches 56, 62. In this situation, however, it must be ensured by the clutches 56, 62, that the transmission units 32, 34 do not both impose drive torque simultaneously onto the middle axle 20.

By reference to Fig. 4, an embodiment of a hydrostatic-mechanical split-output transmission unit 66 is described hereinafter. Such a hydrostatic-mechanically split-output transmission unit 66 of this type can be used, for example, as a steplessly adjustable transmission unit 32 and/or 34.

The input shaft 36 of the transmission unit 66 leads to a planetary gear arrangement 68, in which the input torque is divided in a known manner into a hydrostatic branch 70 and a mechanical branch 72. In addition, input torque, for example for a power take-off drive, can be branched off at a contact part 74, which is rigidly connected to the input shaft 36. The hydrostatic branch 70 has an adjustable hydraulic pump 76 and two adjustable hydraulic motors 78, 80, driven by the hydraulic pump 76. The corresponding hydraulic lines between the hydraulic pump 76 and the two hydraulic motors 78, 80, are not represented in Fig. 4. At a summation shaft 82 the outputs transferred from the hydrostatic branch 70 and the mechanical branch 72 are added together. In addition, a travel stepping gear 84 with steps I and II is provided, wherein Step I is provided slower speeds (forwards travel: 0-36 km/h; reverse travel 0-20 km/h) and step II for higher speeds (forwards travel: 0-50 km/h; reverse travel 0-38 km/h). The steps I and II in this situation are switched electronically, wherein, during the switching process, the power flow is interrupted. The output given off by the travel stepping gear 84 is then transferred onto the take-off shaft 38 of the transmission unit 66. By adjusting the hydraulic pump 76 and/or the two hydraulic motors 78, 80, the portion of the output transferred by the hydrostatic branch 70 can be adjusted.

A description is provided hereinafter, making reference to Fig. 5, of a second embodiment of a transmission unit 86. Hereinafter only the differences in relation to the transmission unit 66 represented in Fig. 4 are explained. By contrast with the transmission unit 66 represented in Fig. 4, with the transmission unit 86, for reasons of costs and spatial requirements, in the hydrostatic branch 70 there is only one hydraulic motor 78 provided, which has greater output and is larger in comparison with the hydraulic motor from Figure 4. In addition, likewise for reasons of costs and construction spatial requirements, no travel stepping transmission is provided, but at the summation shaft 82 only the transferred output from the mechanical branch 72 and from the hydrostatic branch 70 are added. The added output is then transferred onto the take-off shaft 38. The hydraulic pump 76 is in turn connected by hydraulic lines (not shown) to the one hydraulic motor 78. In addition, with the transmission unit 86 from Fig. 5 no contact point is provided taking off torque from the input shaft 36. The transmission unit represented in Fig. 5 is predominantly suitable for lower maximum speeds of up to about 40 km/h, while the transmission unit 66 represented in Fig. 4 is also suitable for higher maximum speeds. For tractors for which a high speed capability is desired, the use of the transmission unit 66 represented in Fig. 4 is therefore advantageous.

Hereinafter, by making reference to Figures 6A and 6B, the arrangement of the transfer gear 26 is explained in relation to the two steplessly adjustable transmission units 32, 34. In this situation, Fig. 6B shows the oval area represented in Fig. 6A in an enlarged view.

In Figures 6A and 6B the jointed shaft 24, which leads to the transfer gear 26 is represented diagrammatically by a line. The transfer gear 26 is flanged to the side of the second steplessly adjustable transmission unit 34, and is arranged above the frame element 12. In particular the transfer gear 26 is arranged above the intermediate housing 12a, which extends between the housing of the second steplessly adjustable transmission unit 34 and the housing of the axle differential gear unit 20a of the middle axle 20. A further intermediate housing 12a extends between the housing of the axle differential gear unit 20a of the middle axle 20 and the housing of the first steplessly adjustable transmission unit 32.

From the transfer gear 26, a front drive shaft 28 leads to the first steplessly adjustable transmission unit 32 and a rear take-off shaft 30 to the second steplessly adjustable transmission unit 34. The front take-off shaft 28 and the rear take-off shaft 30 in this situation are rigidly connected to one another. As can be seen on the basis of Figures 6A and 6B, the rear take-off shaft 30 is coupled directly at the transition between the housing of the transfer gear 26 and the housing of the second steplessly adjustable transmission unit 34 to a corresponding intake shaft (not shown) of the second steplessly adjustable transmission unit 34. The front and rear take-off shafts 28, 30 run outside the transmission composite. In addition, provision can optionally be made for output to be split at the transfer gear 26, such as, for example, for a power take-off drive, by means of a take-off shaft 88. In the embodiment represented in Figures 1 to 3, however, such a take-off is not provided.

The present invention is not restricted to the embodiments represented in the Figures. For example, provision may be made for more than two axles (in this case, the front axle and the rear axle) to be steerable. In particular, with a utility vehicle with three driveable vehicle axles, it would be possible for all three vehicle axles to be designed as steerable vehicle axles. This makes it possible for a very small turning circle to be achieved.

Provision can also be made for two vehicle axles to be arranged between the front axle and the rear axle, of which at least one is driveable. Preferably, in this case both of the vehicle axles arranged between the front axle and the rear axle can be raised.

With the embodiment represented in Figures 1 to 3, the first steplessly adjustable transmission unit 32 is allocated to the front axle 18 and the rear axle 20, while the second steplessly adjustable transmission unit 34 is allocated to the rear axle 22. As has already been explained in the introductory part, however, as an alternative the first steplessly adjustable transmission unit 32 can be allocated exclusively to the front axle 18, while the second steplessly adjustable transmission unit 34 can be allocated to the middle axle 20 and the rear axle 22. In this case, it is sensible for the all-wheel clutch 54, explained in relation to Figures 1 to 3, the switchable clutch 56 and the emergency clutch 62 to be provided in mirror image to the arrangement represented in Figures 1 to 3.

In addition, the combustion engine 4 represented in Figures 1 to 3 can be replaced by an electricity generator coupled to the combustion engine and the two steplessly adjustable transmission units 32, 34 can in each case be replaced by electric motors. The arrangement of the driver's cab 6 and the structural attachments 8 can also be varied. In particular, structural attachments 8 can also be provided on the front as well as on the rear of the tractor 2.

In one arrangement (not shown) there is provided a utility vehicle comprising a front axle, a middle axle and a rear axle, an adjustable transmission arrangement, which has two adjustable transmission units wherein a drive input of the transmission arrangement is connected in respect of a drive unit and a drive output of the transmission arrangement is connected in respect of the drive to the three axles in such a way that the three axles can be driven by one of the transmission units and wherein the first adjustable transmission unit is arranged at a position between the front axle and the middle axle (in respect of the longitudinal direction), and in that the second adjustable transmission unit is arranged at a position between the middle axle and the rear axle. It will be appreciated that in such an arrangement, the transmission units are not essentially positioned within a frame or chassis housing.

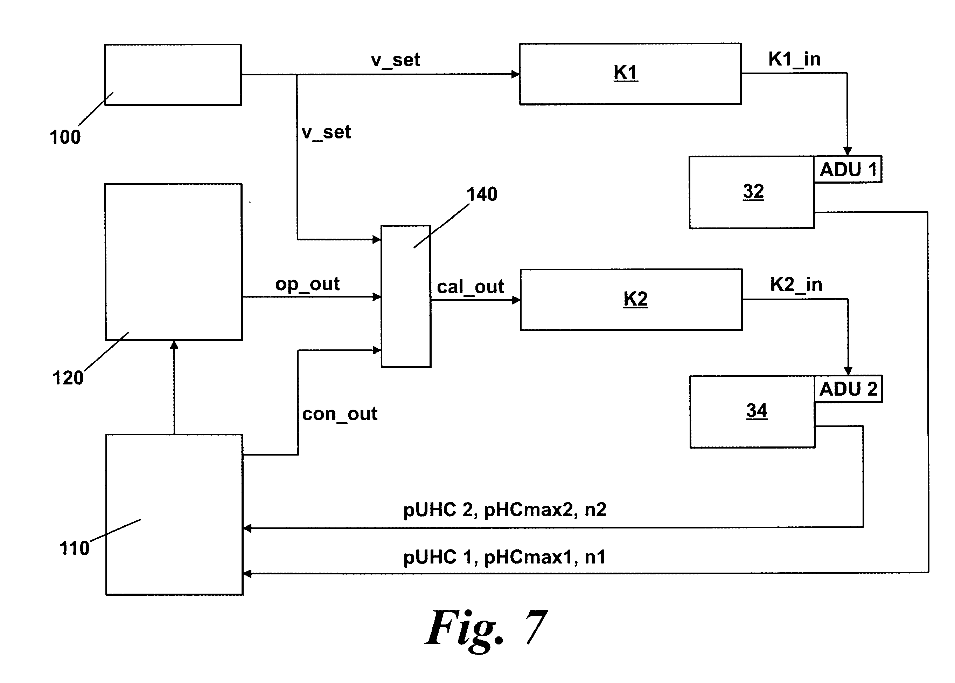

Figure 7 shows a principle sketch which shows a method for synchronising the two transmission units 32, 34. In this situation, by means of a preselection unit 100, a reference value such as a drive torque value of a utility vehicle or a utility vehicle speed can be preselected.

First transmission unit 32 has a first adjustment unit ADU1 and a second transmission unit 34 has a second adjustment unit ADU2. In each case, too, measuring units, not shown in Figure 7, are arranged in the first and second adjustment units ADU1, ADU2.

By means of the preselection unit 100, in this case a vehicle speed v_set is to be specified as a reference value. This reference value v_set is converted by means of a first characteristic map K1 into an input value K1_in for the first adjustment unit ADU1. By means of this input value K1_in, the adjustment unit ADU1 of the first transmission unit 32 can adjust a first revolution speed n1 (not represented in Figure 7) of a drive axle shaft extending from the output of transmission unit 32. In addition, by means of measuring units arranged inside the first transmission unit 32, the first revolution speed n1 of the axle drive shaft and several pressure values pUHC1, pHCmax1 of a hydraulic output branch of the first transmission unit 32 are determined.

The reference value v_set is not communicated directly to the second transmission unit 34, but is mathematically linked to at least one value described hereafter. Accordingly, a result value cal_out from the mathematical link is conducted to a second characteristic map K2 in an arithmetic logic unit 140. By means of the second characteristic map K2 an input value K2_in is determined for a second adjustment unit ADU2 of the second transmission unit 34. The second adjustment unit ADU2 of the second transmission unit 34 can therefore adjust and set a second revolution speed n2 of an emerging axle drive shaft, not shown in Figure 7.

In addition, by means of measuring units arranged inside the second transmission unit 34, the second revolution speed n2 of the axle drive shaft and several pressure values pUHC2, pHCmax2 of the hydraulic output branch of the second transmission unit 34 are determined.

The values determined by the measuring units (not shown) of the first and second adjustment units ADU1, ADU2 are communicated to a control unit 110. The control unit 110 can, for example, be a Proportional-Integral-Derivative (PID) controller. The output value con_out of the PID controller corresponds to an input value of the arithmetic logic unit 140.

The control unit 110 is intended in this situation to compensate for disturbance variables caused by a variance in slippage between two axles for example. This is done by changing the input to output revolution speed transmission ratio of the individual transmission units,

In addition, the vehicle speed v_set specified from the preselection unit 100 is conducted to the arithmetic logic unit 140. In the arithmetic logic unit 140 these two values are, for example, added and the result value cal_out from the calculation is conducted to the second characteristic map K2.

In addition, for example, account can be taken of the influence on the synchronisation of the two transmission units of unequal revolution speeds of the wheels or axles allocated to the transmission units when travelling around bends and/or with tyre pressure and/or a wheel load and/or suspension deviation. This is done by a pilot control unit 120 which generates an operational value op_out. The operational value op_out is communicated to the arithmetic logic unit 140 as an input value, in addition to the vehicle speed v_set and the controlled variable con_out of the arithmetic logic unit 140.

Moreover, the pilot control unit 120 can also be designed in such a way that the output value op_out is adapted to the values of the first and second transmission units 32, 34, as determined by the measuring units in such a way that a continuous optimisation of the pilot control in the sense of reducing the burden of controlling is achieved. Therefore, in the ideal case, the controlled variable con_out becomes essentially zero.

## Claims

1. A utility vehicle, comprising a front axle (18), a middle axle (20) and a rear axle (22), an adjustable transmission arrangement, which has two adjustable transmission units (32, 34) and a drive input of the transmission arrangement is connected in respect of a drive unit (4) and a drive output of the transmission arrangement is connected in respect of the drive to the three axles (18, 20, 22) in such a way that the three axles (18, 20, 22) can be driven by one of the transmission units (32, 34) , the drive (4) of the vehicle is provided by a drive engine, which is mounted on a box frame (10) secured to a frame element (12), **characterised in that** the box frame (10) is arranged above the longitudinal frame element (12), and the box frame (10) is connected to the frame element (12) by means of at least two transverse braces (14) running upwards from the frame element (12) and the units (32; 34) are each designed integrally in the longitudinal frame element (12) which is designed to be at least partially hollow and which run longitudinally and essentially centrally in the utility vehicle, and respective drive outputs (38) of the adjustable transmission units (32, 34) lead into a cavity of the frame element (12), and wherein each unit (32, 34) is each formed by an electro-mechanically split-output transmission unit, a generator, at least one electric motor and by a hydrodynamic-mechanical split-output transmission unit, a mechanical steplessly adjustable transmission unit, or, by a hydrostatic-mechanical split-output transmission unit (32, 34, 66, 86).

2. A utility vehicle according to Claim 1, **characterised in that** the adjustable transmission units (32; 34) are steplessly adjustable.

3. A utility vehicle according to Claim 1 or 2, **characterised in that** the adjustable transmission units (32; 34) are formed in the cavity of the frame element (12), or in a housing of the adjustable transmission units (32; 34) which forms respective parts of the frame element (12).

4. A utility vehicle according to Claim 2, **characterised in that** the steplessly adjustable transmission units (32, 34, 66, 86) are formed by at least one hydrostatic-mechanical split-output transmission unit (32, 34), wherein the respective drive inputs (36) of the steplessly adjustable transmission units (32, 34) each lead to a planetary gear system (68), which splits the incoming drive output into a hydrostatic (70) and a mechanical (72) branch, wherein the hydrostatic branch (70) has an adjustable hydraulic pump (76) and at least one adjustable hydraulic motors (78, 80) driven byhe hydraulic pump (76), and wherein the drive outputs from the minimum of one hydraulic motor (78, 80) and from the mechanical branch (72) are merged together upstream of the drive output (38) of the respective steplessly adjustable transmission unit (32, 34) onto a take-off shaft (38).

5. A utility vehicle according to any of Claims 2 to 4 **characterised in that** the adjustable transmission arrangement has two steplessly adjustable motors, preferably hydraulic motors, wherein a first motor is connected in respect of drive to two vehicle axles, preferably the front axle (18) and the middle axle (20), and the second motor is connected in respect of drive to one vehicle axle, preferably the rear axle (22).

6. A utility vehicle according to any of claims 2 to 4, **characterised in that** the adjustable transmission arrangement has three steplessly adjustable transmission motors, preferably hydraulic motors, wherein each vehicle axle (18, 20, 22) is connected in respect of the drive in each case to a motor.

7. A utility vehicle according to any preceding claim, **characterised in that** the adjustable transmission arrangement is formed by two steplessly adjustable transmission units (32; 34), which are formed behind one another in relation to the longitudinal direction of the frame element (12) and integrally in the frame element (12).

8. A utility vehicle according to Claim 7, **characterised in that** a first steplessly adjustable transmission unit (32) is connected in respect of the drive to two vehicle axles, preferably to the front axle (18) and the middle axle (20), and **in that** the second steplessly adjustable transmission unit (34) is connected in respect of the drive to one vehicle axle, preferably the rear axle (22).

9. A utility vehicle according to Claim 8, **characterised in that** the first steplessly adjustable transmission unit (32) is arranged in the frame element (12) at a position between the front axle (18) and the middle axle (20), and **in that** the second steplessly adjustable transmission unit (34) is arranged in the frame element (12) at a position between the middle axle (20) and the rear axle (22), wherein the drive connection (40, 42, 44) between the two steplessly adjustable transmission units (32, 34) and the individual vehicle axles (18, 20, 22) is arranged at least partially in the cavity of the frame element (12).

10. A utility vehicle according to Claim 8 or 9, **characterised in that** a switchable or steplessly switchable clutch (54) is provided between the first steplessly adjustable transmission unit (32) and the front axle (13), by means of which the drive connection (40) between the first steplessly adjustable transmission unit (32) and the front axle (18) can be separated, wherein the clutch (54) is preferably formed integrally in the frame element (12).

11. A utility vehicle according to any one of Claims 8 to 10, **characterised in that** between the first steplessly adjustable transmission unit (32) and the middle axle (20) a switchable or steplessly switchable clutch (56) is provided, by means of which the drive connection (42) between the first steplessly adjustable transmission unit (32) and the middle axle (20) can be separated, wherein the clutch (56) is arranged integrally in the frame element (12).

12. A utility vehicle according to any preceding Claim, **characterised in that** a drive connection can be established between the first adjustable transmission unit (32) and the second adjustable transmission (34) unit by means of a switchable emergency clutch (62), so that in the event of the failure of a transmission unit (32; 34), this unit can be driven by the other unit (34; 32) by engaging the emergency clutch (62).

13. A utility vehicle according to any one of Claims 10 to 12, **characterised in that** a switchable or a steplessly switchable clutch (62) is arranged between the first and second steplessly adjustable transmission units (32, 34), by means of which a drive connection can be established.

14. A utility vehicle according to any preceding Claim, **characterised in that** a transfer gear (26) is arranged between the drive (4) and the two adjustable transmission units (32, 34), by means of which a drive output from the drive (4) is divided at least partially onto the two adjustable transmission units (32, 34), wherein the transfer gear (26) preferably has two take-off shafts (28, 30), which in each case lead to the two adjustable transmission units (32, 34) and which are coupled to one another in such a way that they rotate at the same revolution speed.

15. A utility vehicle according to any one of the preceding claims, **characterised in that** the three vehicle axles (18, 20, 22) have in each case axle differential gears (18a, 20a, 22a), which preferably are arranged integrally in the frame element (12), wherein the drive connections (40, 42, 44), which are formed preferably as drive shafts (40, 42, 44), run from the drive output(s) (38) of the adjustable transmission units (32, 34) to the individual axle differential gears (18a, 20a, 22a) of the three vehicle axles (18, 20, 22) in the frame element (12), formed hollow in these sections.

16. A utility vehicle according to any one of the preceding claims, **characterised by** a control unit (58), by means of which the torque forces can be adjusted which are transferred from the steplessly adjustable transmission units (32, 34) and/or from the minimum of three driveable vehicle axles (18, 20, 22).

17. A utility vehicle according to any one of the preceding claims, **characterised in that** the three vehicle axles (18, 20, 22) are designed as spring-suspension pendulum axles or as spring-suspension pendulum half-axles (18b, 18c, 20b, 20c, 22b, 22c) or **in that** the minimum of three vehicle axles (18, 20, 22) have in each case a spring-suspension individual wheel suspension arrangement.

18. A utility vehicle according to Claim 17, **characterised in that** all the wheels (16) or caterpillar track units provided on the three vehicle axles (18, 20, 22) have associated spring suspension units (18d, 18e, 20d, 20e, 22d, 22e), wherein the spring suspension units (18d, 18e, 20d, 20e, 22d, 22e) of the individual wheels (16) or caterpillar track units can be adjusted by means of a control unit (58), wherein the control unit (58) is preferably arranged in such a manner that it activates the spring suspension units (18d, 18e, 20d, 20e, 22d, 22e) as a function of the travel speed, the curve radius and/or the vehicle inclination.

19. A utility vehicle according to any one of the preceding claims, **characterised in that** all the wheels (16) provided on the minimum of three vehicle axles (18, 20, 22) are equipped with an anti-lock braking system.

20. A utility vehicle according to any one of the preceding claims, **characterised in that** the front axle (18) and the rear axle (22) are designed as steerable vehicle axles, wherein the steering of the front axle (18) is effected mechanically with hydraulic support and the steering of the rear axle (22) is effected exclusively hydraulically.

21. A utility vehicle according to any one of the preceding claims, **characterised in that** the middle axle (20) is designed as a non-steerable vehicle axle, which can be raised by an associated raising mechanism.

22. A utility vehicle according to any one of the preceding claims, **characterised in that** the rear axle (22) can be raised by an associated raising mechanism.

## Patentansprüche

1. Nutzfahrzeug, mit einer Vorderachse (18), einer Mittelachse (20) und einer Hinterachse (22), einer zwei einstellbare Getriebeeinheiten (32, 34) aufweisen einstellbaren Getriebeanordnung, wobei ein Antriebseingang der Getriebeanordnung mit Bezug auf eine Antriebseinheit (4) und ein Antriebsausgang der Getriebeanordnung mit Bezug auf den Antrieb der drei Achsen (18, 20, 22) so verbunden ist, dass die drei Achsen (18, 20, 22) durch eine der Getriebeeinheiten (32, 34) angetrieben werden können, wobei der Antrieb (4) des Fahrzeugs durch einen Antriebsmotor bereitgestellt wird, der auf einem an einem Rahmenelement (12) befestigten Kastenrahmen (10) montiert ist, **dadurch gekennzeichnet, dass**
der Kastenrahmen (10) oberhalb des sich längs erstreckenden Rahmenelements (12) angeordnet und der Kastenrahmen (10) mit dem Rahmenelement (12) mittels mindestens zwei sich quer erstreckender Spangen, Streben oder Klammern (14) verbunden ist, die sich von dem Rahmenelement (12) nach oben erstrecken, und
die Einheiten (32; 34) jeweils in dem sich längs erstreckenden Rahmenelement (12) eingebaut sind, das zumindest teilweise hohl ausgebildet ist, und sich längs und im Wesentlichen mittig in dem Nutzfahrzeug erstrecken, und
entsprechende Antriebsausgänge (38) der einstellbaren Getriebeeinheiten (32, 34) in einen Hohlraum des Rahmenelements (12) führen, und
jede Einheit (32, 34) durch eine elektromechanische Getriebeeinheit mit einem geteilten Ausgang, einen Generator, mindestens einen Elektromotor und durch eine hydrodynamischmechanische Getriebeeinheit mit einem geteilten Ausgang, eine mechanische stufenlos einstellbare Getriebeeinheit oder durch eine hydrostatisch-mechanische Getriebeeinheit (32, 34, 66, 86) mit einem geteilten Ausgang gebildet wird.

2. Nutzfahrzeug nach Anspruch 1, **dadurch gekennzeichnet, dass** die einstellbaren Getriebeeinheiten (32; 34) stufenlos einstellbar sind.

3. Nutzfahrzeug nach Anspruch 1 oder 2, **dadurch gekennzeichnet, dass** die einstellbaren Getriebeeinheiten (32; 34) in dem Hohlraum des Rahmenelements (12) oder in einem einen entsprechenden Teil des Rahmenelements (12) bildenden Gehäuse der einstellbaren Getriebeeinheiten (32; 34) gebildet sind.

4. Nutzfahrzeug nach Anspruch 2, **dadurch gekennzeichnet, dass** die stufenlos einstellbaren Getriebeeinheiten (32, 34, 66, 86) durch mindestens eine hydrostatisch-mechanische Getriebeeinheit (32, 34) mit einem geteilten Ausgang gebildet werden, wobei die entsprechenden Antriebseingänge (36) der stufenlos einstellbaren Getriebeeinheiten (32, 34) jeweils zu einem Planetengetriebesystem (68) führen, welches den eingehenden Antriebsausgang in einen hydrostatischen Zweig (70) und einen mechanischen Zweig (72) teilt, wobei der hydrostatische Zweig (70) eine einstellbare hydraulische Pumpe (76) und mindestens einen durch die hydraulische Pumpe (76) angetriebenen einstellbaren hydraulischen Motor (78, 80) aufweist, und wobei die Antriebsausgänge von mindestens einem hydraulischen Motor (78, 80) und dem mechanischen Zweig (72) stromaufwärts des Antriebsausgangs (38) der entsprechenden stufenlos einstellbaren Getriebeeinheit (32, 34) auf einer Abtriebswelle (38) zusammengeführt werden.

5. Nutzfahrzeug nach einem der Ansprüche 2 bis 4, **dadurch gekennzeichnet, dass** die einstellbare Getriebeanordnung zwei stufenlos einstellbare Motoren, vorzugsweise hydraulische Motoren, aufweist, wobei ein erster Motor mit Bezug auf einen Antrieb der zwei Fahrzeugachsen, vorzugsweise der Vorderachse (18) und der Mittelachse (20), und der zweite Motor mit Bezug auf einen Antrieb einer Fahrzeugachse, vorzugsweise der Hinterachse (22), verbunden ist.

6. Nutzfahrzeug nach einem der Ansprüche 2 bis 4, **dadurch gekennzeichnet, dass** die einstellbare Getriebeanordnung drei stufenlos einstellbare Getriebemotoren, vorzugsweise hydraulische Motoren, aufweist, wobei jede Fahrzeugachse (18, 20, 22) in jedem Fall mit Bezug auf den Antrieb eines Motors verbunden ist.

7. Nutzfahrzeug nach einem der vorgehenden Ansprüche, **dadurch gekennzeichnet, dass** die einstellbare Getriebeanordnung durch zwei stufenlos einstellbare Getriebeeinheiten (32; 34) gebildet ist, die in der Längsrichtung des Rahmenelements (12) hintereinander ausgebildet und in das Rahmenelement (12) eingebaut sind.

8. Nutzfahrzeug nach Anspruch 7, **dadurch gekennzeichnet, dass** eine erste stufenlos einstellbare Getriebeeinheit (32) mit Bezug auf den Antrieb von zwei Fahrzeugachsen, vorzugsweise der Vorderachse (18) und der Mittelachse (20), verbunden ist und dass die zweite stufenlos einstellbare Getriebeeinheit (34) mit Bezug auf den Antrieb einer Fahrzeugachse, vorzugsweise der Hinterachse (22), verbunden ist.

9. Nutzfahrzeug nach Anspruch 8, **dadurch gekennzeichnet, dass** die erste stufenlos einstellbare Getriebeeinheit (32) in dem Rahmenelement (12) an einer Position zwischen der Vorderachse (18) und der Mittelachse (20) angeordnet ist und dass die zweite stufenlos einstellbare Getriebeeinheit (34) in dem Rahmenelement (12) an einer Position zwischen der Mittelachse (20) und der Hinterachse (22) angeordnet ist, wobei die Antriebsverbindung (40, 42, 44) zwischen den zwei stufenlos einstellbaren Getriebeeinheiten (32, 34) und der jeweiligen Fahrzeugachse (18, 20, 22) zumindest teilweise in dem Hohlraum des Rahmenelements (12) angeordnet ist.

10. Nutzfahrzeug nach Anspruch 8 oder 9, **dadurch gekennzeichnet, dass** eine schaltbare oder stufenlos schaltbare Kupplung (54) zwischen der ersten stufenlos einstellbaren Getriebeeinheit (32) und der Vorderachse (18) bereitgestellt ist, durch die die Antriebsverbindung (40) zwischen der ersten stufenlos einstellbaren Getriebeeinheit (32) und der Vorderachse (18) getrennt werden kann, wobei die Kupplung (54) vorzugsweise in das Rahmenelement (12) eingebaut ist.

11. Nutzfahrzeug nach einem der Ansprüche 8 bis 10, **dadurch gekennzeichnet, dass** zwischen der ersten stufenlos einstellbaren Getriebeeinheit (32) und der Mittelachse (20) eine schaltbare oder stufenlos schaltbare Kupplung (56) vorgesehen ist, durch die die Antriebsverbindung (42) zwischen der ersten stufenlos einstellbaren Getriebeeinheit (32) und der Mittelachse (20) getrennt werden kann, wobei die Kupplung (56) in das Rahmenelement (12) eingebaut ist.

12. Nutzfahrzeug nach einem der vorgehenden Ansprüche, **dadurch gekennzeichnet, dass** durch eine schaltbare Notfallkupplung (62) eine Antriebsverbindung zwischen der ersten einstellbaren Getriebeeinheit (32) und der zweiten einstellbaren Getriebeeinheit (34) hergestellt werden kann, so dass im Falle eines Versagens der Getriebeeinheit (32; 34) diese Einheit durch einen Eingriff der Notfallkupplung (62) mittels der anderen Einheit (34; 32) betrieben werden kann.

13. Nutzfahrzeug nach einem der Ansprüche 10 bis 12, **dadurch gekennzeichnet, dass** eine schaltbare oder stufenlos schaltbare Kupplung (62) zwischen der ersten und der zweiten stufenlos schaltbaren Getriebeeinheit (32, 34) angeordnet ist, mittels der eine Antriebsverbindung hergestellt werden kann.

14. Nutzfahrzeug nach einem der vorgehenden Ansprüche, **dadurch gekennzeichnet, dass** ein Verteilergetriebe (26) zwischen dem Antrieb (4) und den zwei einstellbaren Getriebeeinheiten (32, 34) angeordnet ist, mit dem ein Antriebsausgang von dem Antrieb (4) zumindest teilweise auf die zwei einstellbaren Getriebeeinheiten (32, 34) verteilt wird, wobei das Verteilergetriebe (26) vorzugsweise zwei Abtriebswellen (28, 30) aufweist, die in jedem Fall zu den zwei einstellbaren Getriebeeinheiten (32, 34) führen und so miteinander verbunden sind, dass sie mit derselben Drehzahl rotieren.

15. Nutzfahrzeug nach einem der vorgehenden Ansprüche, **dadurch gekennzeichnet, dass** die drei Fahrzeugachsen (18, 20, 22) in jedem Fall Achsdifferentiale (18a, 20a, 22a) aufweisen, die vorzugsweise in dem Rahmenelement (12) eingebaut sind, wobei sich die Antriebsverbindungen (40, 42, 44), die vorzugsweise als Antriebswellen (40, 42, 44) ausgebildet sind, von dem Antriebsausgang (38) bzw. den Antriebsausgängen (38) der einstellbaren Getriebeeinheiten (32, 34) zu den einzelnen Achsdifferentialen (18a, 20a, 22a) der drei Fahrzeugachsen (18, 20, 22) in dem Rahmenelement (12) erstrecken und in diesem Bereichen hohl ausgebildet sind.

16. Nutzfahrzeug nach einem der vorgehenden Ansprüche, **gekennzeichnet durch** eine Regeleinheit (58), mittels der sich die Drehmomente bzw. Drehmomentkräfte einstellen lassen, die von den stufenlos einstellbaren Getriebeeinheiten (32, 34) und/oder den mindestens drei antreibbaren Fahrzeugachsen (18, 20, 22) übertragen werden.

17. Nutzfahrzeug nach einem der vorgehenden Ansprüche, **dadurch gekennzeichnet, dass** die drei Fahrzeugachsen (18, 20, 22) als federnd aufgehängte Pendelachsen oder als federnd aufgehängte Pendelhalbachsen (18b, 18c, 20b, 20c, 22b, 22c) ausgebildet sind oder dass die mindestens drei Fahrzeugachsen (18, 20, 22) in jedem Fall eine federnd aufgehängte Einzelradaufhängungsanordnung aufweisen.

18. Nutzfahrzeug nach Anspruch 17, **dadurch gekennzeichnet, dass** alle an den drei Fahrzeugachsen (18, 20, 22) bereitgestellten Räder (16) oder Raupenketteneinheiten zugeordnete federnd aufgehängte Einheiten (18d, 18e, 20d, 20e, 22d, 22e) aufweisen, wobei die federnd aufgehängten Einheiten (18d, 18e, 20d, 20e, 22d, 22e) der einzelnen Räder (16) oder Raupenketteneinheiten mittels einer Regeleinheit (58) eingestellt werden können, wobei die Regeleinheit (58) vorzugsweise so angeordnet ist, dass sie die federnd aufgehängten Einheiten (18d, 18e, 20d, 20e, 22d, 22e) in Abhängigkeit von der Fahrgeschwindigkeit, dem Kurvenradius und/oder der Fahrzeugneigung aktiviert.

19. Nutzfahrzeug nach einem der vorgehenden Ansprüche, **dadurch gekennzeichnet, dass** alle an den mindestens drei Fahrzeugachsen (18, 20, 22) vorgesehenen Räder (16) mit einem Antiblockierbremssystem ausgestattet sind.

20. Nutzfahrzeug nach einem der vorgehenden Ansprüche, **dadurch gekennzeichnet, dass** die Vorderachse (18) und die Hinterachse (22) als lenkbare Fahrzeugachsen ausgebildet sind, wobei das Lenken der Vorderachse (18) mechanisch mit hydraulischer Unterstützung und das Lenken der Hinterachse (22) nur hydraulisch ausgeführt wird.

21. Nutzfahrzeug nach einem der vorgehenden Ansprüche, **dadurch gekennzeichnet, dass** die Mittelachse (20) als nicht lenkbare Fahrzeugachse ausgebildet ist, die mittels eines zugehörigen Liftmechanismus angehoben werden kann.

22. Nutzfahrzeug nach einem der vorgehenden Ansprüche, **dadurch gekennzeichnet, dass** die Hinterachse (22) durch einen zugehörigen Liftmechanismus angehoben werden kann.

## Revendications

1. Véhicule utilitaire, comprenant un essieu avant (18), un essieu central (20) et un essieu arrière (22), un agencement de transmission réglable, qui comporte deux unités de transmission réglables (32, 34) et une entrée d'entraînement de l'agencement de transmission est couplée par rapport à une unité d'entraînement (4) et une sortie d'entraînement de l'agencement de transmission est couplée avec possibilité d'entraînement aux trois essieux (18, 20, 22) de telle manière que les trois essieux (18, 20, 22) peuvent être entraînés par l'une des unités de transmission (32, 34), l'unité d'entraînement (4) du véhicule est constituée par un moteur d'entraînement, qui est monté sur un châssis en caisson (10) fixé sur un élément de châssis (12), **caractérisé en ce que** le châssis en caisson (10) est agencé au-dessus de l'élément de châssis (12) longitudinal, et le châssis en caisson (10) est couplé à l'élément de châssis (12) au moyen d'au moins deux renforts transversaux (14) s'étendant vers le haut à partir de l'élément de châssis (12) et les unités (32 ; 34) sont chacune conçues de manière unitaire sur l'élément de châssis (12) longitudinal qui est conçu de manière à être au moins partiellement creux et qui s'étend longitudinalement et de manière sensiblement centrale sur le véhicule utilitaire, et des sorties d'entraînement respectives (38) des unités de transmission réglables (32, 34) conduisent dans une cavité de l'élément de châssis (12), et dans lequel chaque unité (32, 34) est formée chacune par une unité de transmission à sortie découplée de manière électromécanique, un générateur, au moins un moteur électrique et par une unité de transmission à sortie découplée, hydrodynamique et mécanique, une unité de transmission mécanique réglable de manière continue ou par une unité de transmission à sortie découplée, hydrostatique et mécanique (32, 34, 66, 86).

2. Véhicule utilitaire selon la revendication 1, **caractérisé en ce que** les unités de transmission réglables (32 ; 34) sont réglables de manière continue.

3. Véhicule utilitaire selon la revendication 1 ou 2, **caractérisé en ce que** les unités de transmission réglables (32 ; 34) sont formées dans la cavité de l'élément de châssis (12) ou dans un logement des unités de transmission réglables (32 ; 34) qui forme des parties respectives de l'élément de châssis (12).

4. Véhicule utilitaire selon la revendication 2, **caractérisé en ce que** les unités de transmission réglables de manière continue (32, 34, 66, 86) sont formées par au moins une unité de transmission à sortie découplée hydrostatique et mécanique (32, 34), dans lequel les entrées d'entraînement respectives (36) des unités de transmission réglables de manière continue (32, 34) conduisent chacune à un dispositif à engrenage planétaire (68), qui répartit la sortie d'entraînement en entrée en une branche hydrostatique (70) et une branche mécanique (72), dans lequel la branche hydrostatique (70) comporte une pompe hydraulique réglable (76) et au moins un des moteurs hydrauliques réglables (78, 80) entraînés par la pompe hydraulique (76) et dans lequel les sorties d'entraînement à partir du minimum d'un moteur hydraulique (78, 80) et de la branche mécanique (72) sont rassemblées en amont de la sortie d'entraînement (38) de l'unité de transmission réglable de manière continue (32, 34) respective sur un arbre de prise de force (38).

5. Véhicule utilitaire selon l'une quelconque des revendications 2 à 4 **caractérisé en ce que** l'agencement de transmission réglable comporte deux moteurs réglables de manière continue, de préférence, des moteurs hydrauliques, dans lequel un premier moteur est couplé avec possibilité d'entraînement à deux essieux de véhicule, de préférence, l'essieu avant (18) et l'essieu central (20), et le second moteur est couplé avec possibilité d'entraînement à un essieu de véhicule, de préférence, l'essieu arrière (22).

6. Véhicule utilitaire selon l'une quelconque des revendications 2 à 4, **caractérisé en ce que** l'agencement de transmission réglable comporte trois moteurs de transmission réglables de manière continue, de préférence, des moteurs hydrauliques, dans lequel chaque essieu de véhicule (18, 20, 22) est, dans chaque cas, couplé avec possibilité d'entraînement à un moteur.

7. Véhicule utilitaire selon l'une quelconque des revendications précédentes, **caractérisé en ce que** l'agencement de transmission réglable est formé par deux unités de transmission réglables de manière continue (32 ; 34), qui sont formées l'une derrière l'autre par rapport à la direction longitudinale de l'élément de châssis (12) et de manière unitaire sur l'élément de châssis (12).

8. Véhicule utilitaire selon la revendication 7, **caractérisé en ce qu'**une première unité de transmission réglable de manière continue (32) est couplée avec possibilité d'entraînement à deux essieux de véhicule, de préférence, l'essieu avant (18) et l'essieu central (20), et **en ce que** la seconde unité de transmission réglable de manière continue (34) est couplée avec possibilité d'entraînement à un essieu de véhicule, de préférence, l'essieu arrière (22).

9. Véhicule utilitaire selon la revendication 8,
**caractérisé en ce que** la première unité de transmission réglable de manière continue (32) est agencée sur l'élément de châssis (12) à un emplacement entre l'essieu avant (18) et l'essieu central (20), et **en ce que** la seconde unité de transmission réglable de manière continue (34) est agencée sur l'élément de châssis (12) à un emplacement entre l'essieu central (20) et l'essieu arrière (22), dans lequel la liaison d'entraînement (40, 42, 44) entre les deux unités de transmission réglables de manière continue (32, 34) et les essieux de véhicule individuels (18, 20, 22) est agencée au moins partiellement dans la cavité de l'élément de châssis (12).

10. Véhicule utilitaire selon la revendication 8 ou 9, **caractérisé en ce qu'**un embrayage pouvant être activé ou pouvant être activé sans à-coup (54) est agencé entre la première unité de transmission réglable sans à-coup (32) et l'essieu avant (18), au moyen duquel la liaison d'entraînement (40) entre la première unité de transmission réglable de manière continue (32) et l'essieu avant (18) peut être désactivée, dans lequel l'embrayage (54) est de préférence formé de manière unitaire sur l'élément de châssis (12).

11. Véhicule utilitaire selon l'une quelconque des revendications 8 à 10, **caractérisé en ce que**, entre la première unité de transmission réglable de manière continue (32) et l'essieu central (20), est agencé un embrayage pouvant être activé ou pouvant être activé sans à-coup (56) au moyen duquel la liaison d'entraînement (42) entre la première unité de transmission réglable de manière continue (32) et l'essieu central (20) peut être désactivée, dans lequel l'embrayage (56) est agencé de manière unitaire sur l'élément de châssis (12).

12. Véhicule utilitaire selon l'une quelconque des revendications précédentes, **caractérisé en ce qu'**une liaison d'entraînement peut être établie entre la première unité de transmission réglable (32) et la seconde unité de transmission réglable (34) au moyen d'un embrayage d'urgence pouvant être activé (62), de telle sorte que, dans le cas de la défaillance d'une unité de transmission (32 ; 34), cette unité peut être entraînée par l'autre unité (34 ; 32) en couplant l'embrayage d'urgence (62).

13. Véhicule utilitaire selon l'une quelconque des revendications 10 à 12, **caractérisé en ce qu'**un embrayage pouvant être activé ou pouvant être activé sans à-coups (62) est agencé entre les première et seconde unités de transmission réglables de manière continue (32, 34), au moyen duquel une liaison d'entraînement peut être établie.

14. Véhicule utilitaire selon l'une quelconque des revendications précédentes, **caractérisé en ce qu'**un engrenage de transfert (26) est agencé entre l'unité d'entraînement (4) et les deux unités de transmission réglables (32, 34), au moyen duquel une sortie d'entraînement à partir de l'unité d'entraînement (4) est répartie au moins partiellement sur les deux unités de transmission réglables (32, 34), dans lequel l'engrenage de transfert (26) comporte, de préférence, deux arbres de prise de force (28, 30), qui, dans chaque cas, conduisent aux deux unités de transmission réglables (32, 34) et qui sont couplés l'un à l'autre de telle manière qu'ils tournent à la même vitesse de rotation.

15. Véhicule utilitaire selon l'une quelconque des revendications précédentes, **caractérisé en ce que** les trois essieux de véhicule (18, 20, 22) comportent dans chaque cas des engrenages différentiels d'essieu (18a, 20a, 22a), qui sont de préférence agencés de manière unitaire sur l'élément de châssis (12), dans lequel les liaisons d'entraînement (40, 42, 44), qui sont réalisées de préférence sous forme d'arbres d'entraînement (40, 42, 44), s'étendent depuis la ou les sorties d'entraînement (38) des unités de transmission réglables (32, 34) vers les engrenages différentiels d'essieux individuels (18a, 20a, 22a) des trois essieux de véhicule (18, 20, 22) sur l'élément de châssis (12), formé en creux dans ces sections.

16. Véhicule utilitaire selon l'une quelconque des revendications précédentes, **caractérisé par** une unité de commande (58), au moyen de laquelle les couples qui sont transférés à partir des unités de transmission réglables de manière continue (32, 34) et/ou à partir du minimum des trois essieux de véhicule conducteur (18, 20, 22) peuvent être ajustés.

17. Véhicule utilitaire selon l'une quelconque des revendications précédentes, **caractérisé en ce que** les trois essieux de véhicule (18, 20, 22) sont conçus comme des essieux pendulaires à suspension à ressort ou comme des demi-essieux pendulaires à suspension à ressort (18b, 18c, 20b, 20c, 22b, 22c) ou **en ce que** le minimum de trois essieux de véhicule (18, 20, 22) présente, dans chaque cas, un agencement de suspension de roue individuel à suspension à ressort.

18. Véhicule utilitaire selon la revendication 17, **caractérisé en ce que** toutes les roues (16) ou unités à chenilles agencées sur les trois essieux de véhicule (18, 20, 22) comportent des unités de suspension à ressort (18d, 18e, 20d, 20e, 22d, 22e) associées, dans lequel les unités de suspension à ressort (18d, 18e, 20d, 20e, 22d, 22e) des roues individuelles (16) ou des unités à chenilles peuvent être ajustées au moyen d'une unité de commande (58), dans lequel l'unité de commande (58) est, de préférence, agencée de telle manière qu'elle active les unités de suspension à ressort (18d, 18e, 20d, 20e, 22d, 22e) en fonction de la vitesse de déplacement, du rayon de courbe et/ou de l'inclinaison de véhicule.

19. Véhicule utilitaire selon l'une quelconque des revendications précédentes, **caractérisé en ce que** toutes les roues (16) agencées sur le minimum de trois essieux de véhicule (18, 20, 22) sont équipées d'un dispositif de freinage antiblocage.

20. Véhicule utilitaire selon l'une quelconque des revendications précédentes, **caractérisé en ce que** l'essieu avant (18) et l'essieu arrière (22) sont conçus comme des essieux directeurs de véhicule, dans lequel la direction de l'essieu avant (18) est assurée mécaniquement avec assistance hydraulique et la direction de l'essieu arrière (22) est assurée exclusivement de manière hydraulique.

21. Véhicule utilitaire selon l'une quelconque des revendications précédentes, **caractérisé en ce que** l'essieu central (20) est conçu comme un essieu de véhicule non directeur, qui peut être soulevé par un mécanisme de levage associé.

22. Véhicule utilitaire selon l'une quelconque des revendications précédentes, **caractérisé en ce que** l'essieu arrière (22) peut être soulevé par un mécanisme de levage associé.
